# EUROPEAN PATENT SPECIFICATION

(11) **EP 4 407 549 B1**
(45) Date of publication and mention of the grant of the patent: **18.03.2026**
(21) Application number: 22887488.9
(22) Date of filing: 20.10.2022
(51) Int. Cl.: G06Q 50/06, G06Q 50/10, G06F 119/06, H02J 7/00

(54) **BATTERY DATA MANAGEMENT APPARATUS AND OPERATING METHOD THEREOF**
BATTERIEDATENVERWALTUNGSVORRICHTUNG UND BETRIEBSVERFAHREN DAFÜR
DISPOSITIF DE GESTION DE DONNÉES DE BATTERIE ET SON PROCÉDÉ DE FONCTIONNEMENT

(30) Priority: 01.11.2021 KR 20210148332
(43) Date of publication of application: 31.07.2024
(73) Proprietor: LG Energy Solution, Ltd., Seoul 07335 (KR)
(72) Inventor: HYEON, Byeong Gyu, Daejeon 34122 (KR); PAEK, Seung Kyu, Daejeon 34122 (KR); LEE, Chung Yong, Daejeon 34122 (KR); CHOI, Young, Daejeon 34122 (KR)
(74) Representative: Plasseraud IP
(86) International application number: PCT/KR2022/016039
(87) International publication number: WO 2023/075292

(56) References cited:
- EP-A1- 3 547 705
- CN-A- 112 428 875
- CN-A- 112 428 875
- KR-A- 20170 078 201
- KR-A- 20190 074 670
- KR-A- 20200 144 053
- KR-A- 20210 114 758
- US-A1- 2016 268 642
- US-A1- 2020 083 722
- US-A1- 2021 068 033
- US-B2- 9 564 762

## Description

### [TECHNICAL FIELD]

### CROSS-REFERENCE TO RELATED APPLICATION

This application claims priority to and the benefit of Korean Patent Application No. 10-2021-0148332 filed in the Korean Intellectual Property Office on November 1, 2021.

### TECHNICAL FIELD

Embodiments disclosed herein relate to a battery data management apparatus and an operating method thereof.

### [BACKGROUND ART]

An energy storage system (ESS) stores high-capacity electric energy in a plurality of battery racks including a plurality of battery modules connected in series and/or in parallel. The battery rack of the ESS may have heat generated therein by chemical reaction occurring in a process of charging and discharging electricity, and the heat may impair performance and lifetime of the battery rack. Thus, the battery rack may transmit battery data including temperature, voltage, and current of the battery rack to a battery system controller (BSC) for management.

However, such a high-capacity BSC performs various functions such as data communication, data logging, etc., as a single system, and needs a high-performance system, resulting in problems like an installation cost and a lot of resources for maintenance.

Further background art is described in US 9564762 B2.

### [DISCLOSURE]

### [TECHNICAL PROBLEM]

Embodiments disclosed herein aim to provide a battery data management apparatus and an operating method thereof, in which various modules may quickly process battery data at the same time and efficiently manage battery data, by distributing operations of functional modules.

Technical problems of the embodiments disclosed herein are not limited to the above-described technical problems, and other unmentioned technical problems would be clearly understood by one of ordinary skill in the art from the following description.

### [TECHNICAL SOLUTION]

The invention is defined by the features of the independent claims. Preferred embodiments are defined in the dependent claims.

A battery data management apparatus according to claim 1 includes a plurality of functional modules configured to perform a defined function based on a preset algorithm, a first broker configured to relay linked operations among the plurality of functional modules based on battery data of at least any one functional module among the plurality of functional modules, and a first controller configured to control operations of the plurality of functional modules and the first broker. The first broker is further configured to cache battery data of at least any one functional module among the plurality of functional modules and relay the battery data, cached from the plurality of functional modules, among the plurality of functional modules. The controller is further configured to, when a failure occurs in at least any one functional module among the plurality of functional modules, control another functional module to perform a defined function of the functional module.

According to an embodiment, the plurality of functional modules may be further configured to perform a defined function based on a control command of the first controller.

According to an embodiment, the plurality of functional modules may be further configured to transmit the battery data by performing battery data communication with the first broker.

According to an embodiment, the battery data management apparatus may further include a second broker configured to relay linked operations among the plurality of functional modules based on battery data of at least any one functional module among the plurality of functional modules and a second controller configured to control operations of the plurality of functional modules and the second broker.

According to an embodiment, the first broker and the second broker may be further configured to share the battery data cached from the plurality of functional modules.

According to an embodiment, the first broker or the second broker may be further configured to transmit the battery data cached from at least any one functional module among the plurality of functional modules to the second broker or the first broker.

According to an embodiment, the first controller or the second controller may be further configured to, when a failure occurs in the first broker or the second broker, control at least any one functional module among the plurality of functional modules performing battery data communication with the first broker or the second broker to perform battery data communication with the second broker or the first broker.

An operating method of a battery data management apparatus according to claim 11 notably includes performing, by a plurality of functional modules, a defined function based on a preset algorithm, relaying, by a first broker, linked operations among the plurality of functional modules based on battery data of at least any one functional module among the plurality of functional modules and controlling, by a first controller, operations of the plurality of functional modules and the first broker.

According to an embodiment, the controlling, by the first controller, of the operations of the plurality of functional modules and the first broker may include, when a failure occurs in at least any one functional module among the plurality of functional modules, controlling, by the first controller, another functional module to perform a defined function of the functional module.

According to an embodiment, the operating method may further include relaying, by a second broker, linked operations among the plurality of functional modules based on battery data of at least any one functional module among the plurality of functional modules and controlling, by a second controller, operations of the plurality of functional modules and the second broker.

According to an embodiment, the relaying, by the first broker, of the linked operations among the plurality of functional modules based on battery data of at least any one functional module among the plurality of functional modules may include transmitting, by the first broker, the battery data cached from at least any one functional module among the plurality of functional modules to the second broker, and the relaying, by the second broker, of the linked operations among the plurality of functional modules based on battery data of at least any one functional module among the plurality of functional modules may include transmitting, by the second broker, the battery data cached from at least any one functional module among the plurality of functional modules to the first broker.

According to an embodiment, the controlling, by the first controller, of the operations of the plurality of functional modules and the first broker may include, when a failure occurs in the first broker, controlling, by the first controller, at least any one functional module among the plurality of functional modules performing battery data communication with the first broker to perform battery data communication with the second broker, and the controlling, by the second controller, of the operations of the plurality of functional modules and the second broker may include, when a failure occurs in the second broker, controlling, by the second controller, at least any one functional module among the plurality of functional modules performing battery data communication with the second broker to perform battery data communication with the first broker.

### [ADVANTAGEOUS EFFECTS]

With a battery data management apparatus and an operating method thereof, it is possible to quickly process battery data at the same time and efficiently manage battery data, by distributing operations of functional modules.

### [DESCRIPTION OF DRAWINGS]

FIG. 1 is a view schematically showing a configuration of an energy storage system to which a battery data management apparatus according to an embodiment disclosed herein is applied.
FIG. 2 is a view for describing in detail a configuration of a battery data management apparatus according to an embodiment disclosed herein.
FIG. 3 is a view for describing in detail a configuration of a battery data management apparatus according to another embodiment disclosed herein.
FIG. 4 is a flowchart of an operating method of a battery management apparatus according to an embodiment disclosed herein.
FIG. 5 is a block diagram showing a hardware configuration of a computing system for performing an operating method of a battery data management apparatus, according to an embodiment disclosed herein.

### [MODE FOR INVENTION]

Hereinafter, some embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present document.

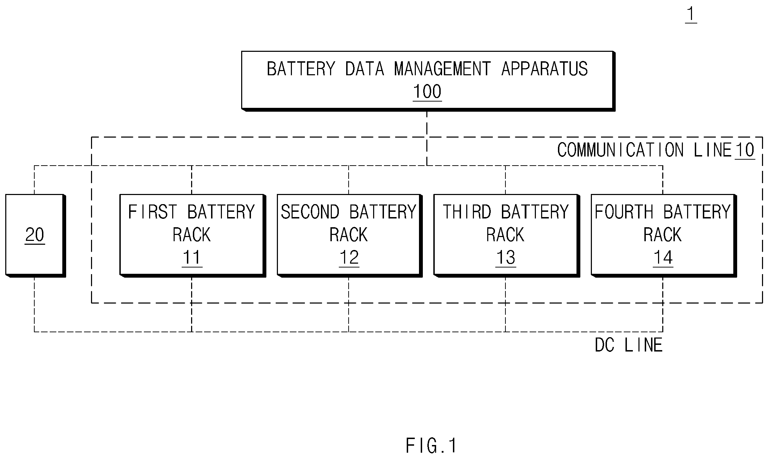

FIG. 1 is a view schematically showing a configuration of an energy storage system to which a battery data management apparatus according to an embodiment disclosed herein is applied.

Referring to FIG. 1, an energy storage system (ESS) 1 may include a battery bank 10, a power conversion system (PCS) 20, and a battery data management apparatus 100.

The battery data management apparatus 100 may control a plurality of batteries of the battery bank 10 to obtain battery data. The battery data management apparatus 100 may perform data communication with the plurality of batteries to receive battery data related to the plurality of batteries. For example, the battery data management apparatus 100 may receive temperature and voltage measurement values of the plurality of batteries, and SoC and SoH parameters derived therefrom, from the plurality of batteries.

According to an embodiment, the battery data management apparatus 100 may be implemented in the form of a battery system controller (BSC) to control operations of the plurality of batteries. That is, the battery data management apparatus 100 may communicate with a controller included in the battery system. The battery data management apparatus 100 may transmit a control signal to the battery system to control the operations of the plurality of batteries. In addition, the battery data management apparatus 100 may receive the battery data from the battery system to manage a state of the battery system.

The battery data management apparatus 100 may analyze and manage the battery data obtained from the plurality of batteries by using internal components having rich computing resources. The battery data management apparatus 100 may also accurately analyze an abnormal phenomenon of the battery data through internal components to diagnose abnormal states of the plurality of batteries.

Herein, the plurality of batteries may be implemented in the form of the plurality of battery racks installed in the energy storage system and storing electric energy, according to an embodiment. The battery rack may be a unit that stores electric energy in the energy storage system. The energy storage system may include one or more battery banks including the plurality of battery racks. The battery bank may include the plurality of battery racks and a bank battery management system (BBMS).

Each of the plurality of battery racks may include a plurality of battery modules, a charging/discharging device, and a rack BMS (RBMS) controlling the plurality of module BMSs controlling the plurality of battery modules. Herein, the plurality of battery modules may supply power to a target device (not shown). To this end, the battery module may be electrically connected to the target device. Herein, the target device may include an electrical, electronic, or mechanical device that operates by receiving power from each of the plurality of battery racks including the plurality of battery modules, and for example, the target device may be, but not limited to, an ESS. Each of the plurality of battery modules may include a plurality of battery cells connected in series and/or in parallel. The plurality of battery cells may be a lithium ion (Li-ion) battery, an Li-ion polymer battery, a nickel-cadmium (Ni-Cd) battery, a nickel hydrogen (Ni-MH) battery, etc., and are not limited thereto.

Hereinbelow, it will be described on the assumption that the plurality of batteries are implemented in the form of a battery bank including the plurality of battery racks.

The battery bank 10 may include a first battery rack 11, a second battery rack 12, a third battery rack 13, and a fourth battery rack 14. Although the plurality of battery racks are illustrated as four in FIG. 1, the present disclosure is not limited thereto, and the battery bank 10 may include n battery racks (n is a natural number equal to or greater than 1).

The battery data management apparatus 100 may manage each component included in the ESS 1 and control an overall operation. That is, the battery data management apparatus 100 may control operations of a plurality of battery racks 11, 12, 13, and 14 and the PCS 20 included in the ESS 1.

First, the battery data management apparatus 100 may receive the battery data from the plurality of battery racks 11, 12, 13, and 14 to manage states of the detail plurality of battery racks 11, 12, 13, and 14. More specifically, the battery data management apparatus 100 may communicate with a controller (e.g., a rack BMS) included in the plurality of battery racks 11, 12, 13, and 14. The battery data management apparatus 100 may receive the battery data from a controller included in the plurality of battery racks 11, 12, 13, and 14 to manage the states of the detail plurality of battery racks 11, 12, 13, and 14.

In addition, the battery data management apparatus 100 may transmit a control signal to the plurality of battery racks 11, 12, 13, and 14 to control operations of the detail plurality of battery racks 11, 12, 13, and 14.

The battery data management apparatus 100 may transmit a control signal to the PCS 20 to control a power conversion operation of the PCS 20. The PCS 20 may perform the power conversion operation under control of the battery data management apparatus 100.

Herein, the PCS 20 may convert an alternating-current power into a direct-current power (AC/DC convert) or convert a direct-current power into a direct-current power (DC/DC convert) to supply the converted direct-current power to the plurality of battery racks 11, 12, 13, and 14. The PCS 20 may convert the direct-current power supplied from the plurality of battery racks 11, 12, 13, and 14 into an alternating-current power. The PCS 20 may supply the converted alternating-current power to a load (not shown).

The plurality of battery racks 11, 12, 13, and 14 may be charged using the direct-current power supplied from the PCS 20. In addition, the plurality of battery racks 11, 12, 13, and 14 may perform a discharge operation by outputting the direct-current power to supply the same to the PCS 20.

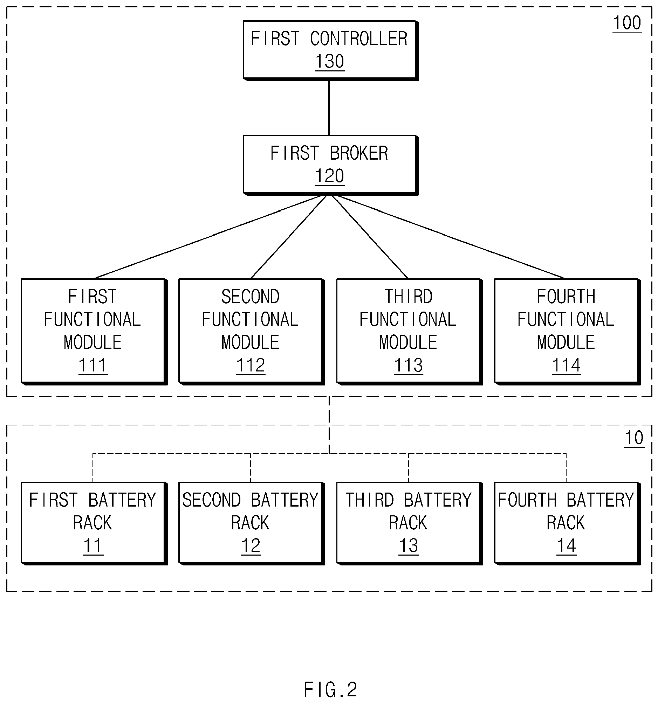

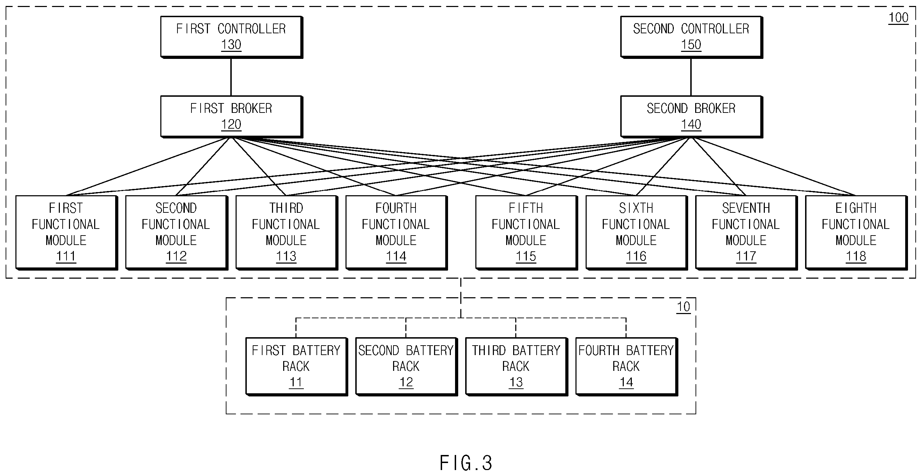

FIG. 2 is a view for describing in detail a configuration of a battery data management apparatus according to an embodiment disclosed herein. FIG. 3 is a view for describing in detail a configuration of a battery data management apparatus according to another embodiment disclosed herein.

Hereinbelow, a configuration of the battery data management apparatus 100 will be described with reference to FIGS. 2 and 3.

First, referring to FIG. 2, the battery data management apparatus 100 includes a plurality of functional modules 110, a first broker 120, and a first controller 130.

The plurality of functional modules 110 may include a first functional module 111, a second functional module 112, a third functional module 113, and a fourth functional module 114. Although the plurality of functional modules are illustrated as four in FIG. 2, the present disclosure is not limited thereto, and the plurality of functional modules 110 may include n functional modules (n is a natural number equal to or greater than 2).

Each of the plurality of functional modules 111, 112, 113, and 114 performs a defined function based on a preset algorithm. For example, each of the plurality of functional modules 111, 112, 113, and 114 performs any one of battery data communication with the plurality of battery racks 11, 12, 13, and 14, control of the plurality of battery racks 11, 12, 13, and 14, and a user interface (UI) operation or battery data logging of the ESS 1 to which the battery data management apparatus 100 is applied. That is, the battery data management apparatus 100 may support load distribution by distinguishing functions of each of the plurality of function modules 111, 112, 113, and 114.

More specifically, each of the plurality of functional modules 111, 112, 113, and 114 may perform a defined function based on a control command of the first controller 130. That is, each of the plurality of functional modules 111, 112, 113, and 114 may perform a designated function based on a control command of the first controller 130.

For example, any one of the plurality of functional modules 111, 112, 113, and 114 may perform battery data communication with the plurality of battery racks 11, 12, 13, and 14 to obtain battery data. For example, the first functional module 111 may perform wired and/or wireless communication with the first battery rack 11 that is any one of the plurality of battery racks 11, 12, 13, and 14. For example, the first functional module 111 may communicate with the first battery rack 11 according to a differential input mode communication protocol. Herein, examples of the differential input mode communication protocol may include a controller area network (CAN), recommended standard 485 (RS-485), recommended standard 422 (RS-422), etc. In addition, for example, the first functional module 111 may communicate with the first battery rack 11 according to a wireless communication protocol such as Wi-Fi (registered trademark), Bluetooth (registered trademark), etc.

Each of the plurality of functional modules 111, 112, 113, and 114 may perform battery data communication with the first broker 120 to transmit the obtained battery data or the generated battery data. That is, the first broker 120 may obtain the battery data from the plurality of functional modules 111, 112, 113, and 114.

The first broker 120 relays linked operations among the plurality of functional modules 111, 112, 113, and 114 based on the battery data obtained from at least any one function module among the plurality of functional modules 111, 112, 113, and 114. More specifically, the first broker 120 caches the battery data of the at least any one functional module among the plurality of functional modules 111, 112, 113, and 114. The first broker 120 relays the plurality of functional modules 111, 112, 113, and 114 based on the battery data cached from the plurality of functional modules 111, 112, 113, and 114.

For example, when the second functional module 112 may perform a designated function based on the battery data obtained by the first functional module 111 among the plurality of functional modules 111, 112, 113, and 114, the first broker 120 may transmit the battery data cached from the first functional module 111 to the second functional module 112 to relay the linked operations among the plurality of functional modules 111, 112, 113, and 114.

In addition, for example, when a failure occurs in the first functional module 111 among the plurality of functional modules 111, 112, 113, and 114, the first broker 120 may transmit the battery data cached from the first functional module 111 where the failure occurs to the second functional module 112 that is drivable to relay operations among the plurality of functional modules 111, 112, 113, and 114.

The first controller 130 controls operations of the plurality of functional modules 111, 112, 113, and 114 and the first broker 120. When a failure occurs in at least any one functional module among the plurality of functional modules 111, 112, 113, and 114, the first controller controls another drivable functional module to perform a designated function of the functional module. More specifically, when a failure occurs in at least any one functional module among the plurality of functional modules 111, 112, 113, and 114, the first controller may transmit a control command such that another drivable functional module performs the function.

According to an embodiment, the battery data management apparatus 100 may drive each of the plurality of functional modules 111, 112, 113, and 114, the first broker 120 that manages the battery data of the plurality of functional modules 111, 112, 113, and 114, and the first controller 130 that controls the plurality of functional modules 111, 112, 113, and 114 and the first broker as a separate hardware device to perform a vertical scaling function. That is, to drive each of the plurality of functional modules 111, 112, 113, and 114, the first broker 120, and the first controller 130 of the battery data management apparatus 100 as a separate hardware device, application processing ability and storage capacity may be scaled up.

Referring to FIG. 3, the battery data management apparatus 100 may further include a second broker 140 and a second controller 150.

The second broker 140 may relay linked operations among a plurality of functional modules 115, 116, 117, and 118 based on the battery data of at least any one function module among the plurality of functional modules 115, 116, 117, and 118. That is, the second broker 140 may horizontally scale up the function of the first broker 120 by performing the same function as the first broker 120.

Thus, by forming a duplex structure including the first broker 120 and the second broker 140 that perform the same function, the battery data management apparatus 100 may process a load, which may be concentrated on any one of the first broker 120 or the second broker 140, in a distributed manner.

According to an embodiment, the battery data management apparatus 100 may drive each of the plurality of functional modules 111, 112, 113, 114, 115, 116, 117, and 118, the first broker 120, the second broker 140, the first controller 130, and the second controller 150 as a separate hardware device to perform a vertical scaling function.

That is, by driving each of the plurality of functional modules 111, 112, 113, 114, 115, 116, 117, and 118, the first broker 120, the second broker 140, the first controller 130, and the second controller 150 of the battery data management apparatus 100 as a separate hardware device, a scale-out function may be performed in which functions processed in one hardware device are distributed into several hardware devices to improve a processing ability.

The first broker 120 and the second broker 140 may share battery data cached from the plurality of functional modules 111, 112, 113, 114, 115, 116, 117, and 118. Thus, the first broker 120 may transmit the battery data cached from at least any one functional module among the plurality of functional modules 111, 112, 113, and 114 to the second broker 140 such that the second broker 140 controls linked operations of the plurality of functional modules 111, 112, 113, and 114. Likewise, the second broker 140 may transmit the battery data cached from at least any one functional module among the plurality of functional modules 115, 116, 117, and 118 to the first broker 120 such that the first broker 120 controls linked operations of the plurality of functional modules 115, 116, 117, and 118.

The second controller 150 may control operations of the plurality of functional modules 110 and the second broker 140. When a failure occurs in at least any one functional module among the plurality of functional modules 111, 112, 113, and 114, the second controller may control another drivable functional module to perform a designated function of the functional module. More specifically, when a failure occurs in at least any one functional module among the plurality of functional modules 111, 112, 113, and 114, the second controller may transmit a control command such that another drivable functional module performs the function.

When a failure occurs in the second broker 140, the second controller 150 may control at least any one function al module among the plurality of functional modules 111, 112, 113, and 114 performing battery data communication with the second broker 140 to perform battery data communication with the first broker 120. That is, the second controller 150 may perform change such that at least any one functional module among the plurality of functional modules 111, 112, 113, and 114 connected to the second broker 140 is connected to the first broker 120.

When a failure occurs in the first broker 120, the first controller 130 may control at least any one function al module among the plurality of functional modules 111, 112, 113, and 114 performing battery data communication with the first broker 120 to perform battery data communication with the second broker 140. That is, the first controller 130 may perform change such that at least any one functional module among the plurality of functional modules 111, 112, 113, and 114 connected to the first broker 120 is connected to the second broker 140.

As described above, with a battery data management apparatus 100 according to an embodiment disclosed herein, it is possible to quickly process battery data at the same time and efficiently manage battery data, by distributing operations of functional modules.

The battery data management apparatus 100 may perform a horizontal scaling function that drives a plurality of functional modules having relatively low performance without having mounted thereon a high-performance system, installation cost and resources required for maintenance may be reduced.

By performing a vertical scaling function including a broker and a controller that manage and control a plurality of functional modules, the battery data management apparatus 100 may immediately respond to a failure in any one functional module or in the broker, thereby removing a down-time of the system.

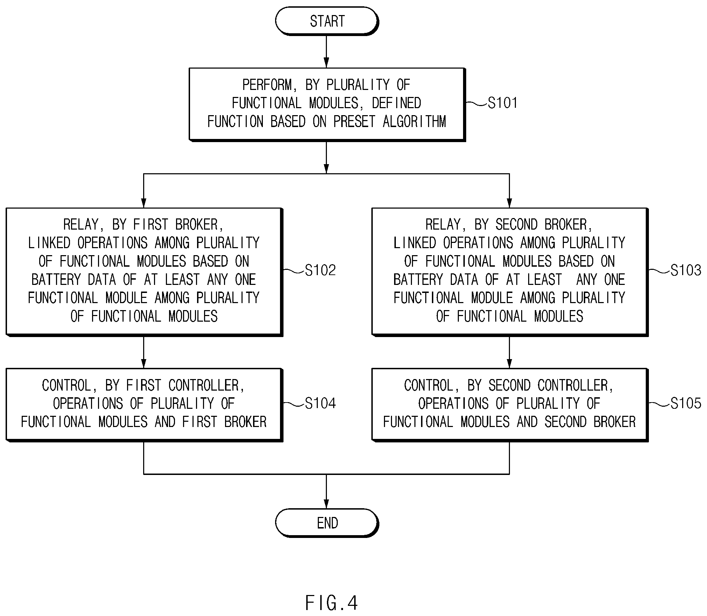

FIG. 4 is a flowchart of an operating method of a battery management apparatus according to an embodiment disclosed herein. Hereinbelow, an operating method of the battery data management apparatus 100 will be described with reference to FIGS. 1 to 3.

The battery data management apparatus 100 may be substantially the same as the battery data management apparatus 100 described with reference to FIGS. 1 to 3, and thus will be briefly described to avoid redundant description.

Referring to FIG. 4, an operating method of the battery data management apparatus 100 includes operation S101 of performing, by the plurality of functional modules 110, a defined function based on a preset algorithm, operation S102 of relaying, by the first broker 120, linked operations among the plurality of functional modules 110 based on battery data of at least any one functional module among the plurality of functional modules 110, optionally operation S103 of relaying, by the second broker 140, linked operations among the plurality of functional modules 110 based on the battery data of the at least any one functional module among the plurality of functional modules 110, operation S104 of controlling, by the first controller 130, operations of the plurality of functional modules 110 and the first broker 120, and optionally operation S105 of controlling, by the second controller 150, operations of the plurality of functional modules 110 and the second broker 140.

Hereinbelow, operations S101 through S105 will be described in detail.

In operation S101, each of the plurality of functional modules 111, 112, 113, and 114 performs a defined function based on a preset algorithm. For example, each of the plurality of functional modules 111, 112, 113, and 114 may perform any one of battery data communication with the plurality of battery racks 11, 12, 13, and 14, control of the plurality of battery racks 11, 12, 13, and 14, and a UI operation or battery data logging of the ESS 1 to which the battery data management apparatus 100 is applied. That is, the battery data management apparatus 100 may support load distribution by distinguishing functions of each of the plurality of function modules 111, 112, 113, and 114.

In operation S101, each of the plurality of functional modules 111, 112, 113, and 114 may perform a defined function based on a control command of the first controller 130.

In operation S102, the second broker 120 relays linked operations among a plurality of functional modules 111, 112, 113, and 114 based on the battery data of at least any one function module among the plurality of functional modules 111, 112, 113, and 114.

In operation S102, the first broker 120 may transmit the battery data cached from at least any one functional module among the plurality of functional modules 111, 112, 113, and 114 to the second broker 140 to perform synchronization with the second broker 140.

In operation S103, the second broker 140 may relay linked operations among a plurality of functional modules 111, 112, 113, and 114 based on the battery data of at least any one function module among the plurality of functional modules 111, 112, 113, and 114.

In operation S103, the second broker 140 may transmit the battery data cached from at least any one functional module among the plurality of functional modules 111, 112, 113, and 114 to the first broker 120 to perform synchronization with the first broker 120.

In operation S104, the first controller 130 controls operations of the plurality of functional modules 111, 112, 113, and 114 and the first broker 120.

In operation S104, when a failure occurs in at least any one functional module among the plurality of functional modules 111, 112, 113, and 114, the first controller 130 controls another drivable functional module to perform a designated function of the functional module.

In operation S104, when a failure occurs in the first broker 120, the first controller 130 may control at least any one function al module among the plurality of functional modules 111, 112, 113, and 114 performing battery data communication with the first broker 120 to perform battery data communication with the second broker 140.

In operation S105, the second controller 150 may control operations of the plurality of functional modules 111, 112, 113, and 114 and the second broker 140.

In operation S105, when a failure occurs in at least any one functional module among the plurality of functional modules 111, 112, 113, and 114, the second controller 150 may control another drivable functional module to perform a designated function of the functional module.

In operation S105, when a failure occurs in the first broker 120, the second controller 150 may control at least any one function al module among the plurality of functional modules 111, 112, 113, and 114 performing battery data communication with the second broker 140 to perform battery data communication with the first broker 120.

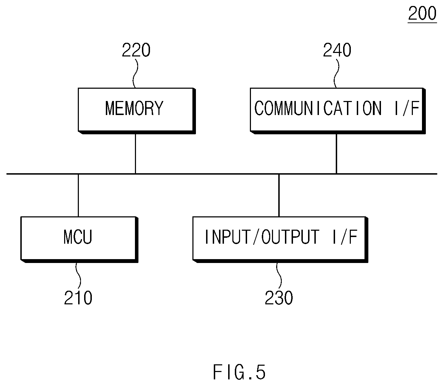

FIG. 5 is a block diagram showing a hardware configuration of a computing system for performing an operating method of a battery data management apparatus, according to an embodiment disclosed herein.

Referring to FIG. 5, a computing system 200 according to an embodiment disclosed herein may include an MCU 210, a memory 220, an input/output I/F 230, and a communication I/F 240.

The MCU 210 may be a broker that executes various programs (e.g., a program for monitoring data of a battery, etc.) stored in the memory 220, processes various data through these programs, and performs the above-described functions of the battery data management apparatus 100 shown in FIG. 1.

The memory 220 may store various programs regarding operations of the battery data management apparatus 100. Moreover, the memory 220 may store operation data of the battery data management apparatus 100.

The memory 220 may be provided in plural, depending on a need. The memory 220 may be volatile memory or non-volatile memory. For the memory 220 as the volatile memory, random access memory (RAM), dynamic RAM (DRAM), static RAM (SRAM), etc., may be used. For the memory 220 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 220 are merely examples and are not limited thereto.

The input/output I/F 230 may provide an interface for transmitting and receiving data by connecting an input device (not shown) such as a keyboard, a mouse, a touch panel, etc., and an output device such as a display (not shown), etc., to the MCU 210.

The communication I/F 240, which is a component capable of transmitting and receiving various data to and from a server, may be various devices capable of supporting wired or wireless communication. For example, a program for resistance measurement and abnormality diagnosis of the battery cell or various data may be transmitted and received to and from a separately provided external server through the communication I/F 240.

The above description is merely illustrative of the technical idea of the present disclosure, and various modifications and variations will be possible without departing from the essential characteristics of the present disclosure by those of ordinary skill in the art to which the present disclosure pertains.

## Claims

1. A battery data management apparatus (100) comprising:
a plurality of functional modules (110; 111, 112, 113, 114), each of the plurality of functional modules being configured to perform a defined function based on a preset algorithm;
a first broker (120) configured to relay linked operations among the plurality of functional modules by caching battery data from at least a first functional module among the plurality of functional modules and relaying the cached battery data to another functional module; and
a first controller (130) configured to control operations of the plurality of functional modules and the first broker;
wherein the defined function of each of the plurality of functional modules is one of the following:
performing battery data communication with a plurality of battery racks when the battery data management apparatus is connected thereto;
controlling the plurality of battery;
performing a user interface operation; and
performing battery data logging of an energy storage system, when the battery data management apparatus is connected thereto;
**characterised in that** the first controller is further configured, if a failure occurs in the first functional module among the plurality of functional modules, to control another functional module to perform the defined first function of the functional module.

2. The battery data management apparatus of claim 1, wherein the plurality of functional modules are further configured to perform the defined function based on a control command of the first controller.

3. The battery data management apparatus of claim 1, wherein the plurality of functional modules are further configured to transmit the battery data by performing a battery data communication with the first broker.

4. The battery data management apparatus of claim 1, further comprising:
a second broker (140) configured to relay linked operations among the plurality of functional modules based on battery data from at least a second functional module among the plurality of functional modules; and
a second controller (150) configured to control operations of the plurality of functional modules and the second broker.

5. The battery data management apparatus of claim 4, wherein the first broker and the second broker are further configured to share the battery data cached from the plurality of functional modules.

6. The battery data management apparatus of claim 5, wherein one of the first broker and the second broker is further configured to transmit the battery data cached from the first or second functional module among the plurality of functional modules to the other of the first broker and the second broker.

7. The battery data management apparatus of claim 4, wherein the first controller or the second controller is further configured if a failure occurs in one of the first broker and the second broker, to control the first or second functional module among the plurality of functional modules performing a battery data communication with the one of the first broker and the second broker to perform battery data communication with the other of the first broker and the second broker.

8. An operating method of a battery data management apparatus, the operating method comprising:
performing (S101), by a plurality of functional modules (110; 111, 112, 113, 114), a defined function based on a preset algorithm;
relaying (S102), by a first broker (120), linked operations among the plurality of functional modules based on battery data from at least a first functional module among the plurality of functional modules; and
controlling (S104), by a first controller (130), operations of the plurality of functional modules and the first broker;
wherein relaying, by the first broker, linked operations among the plurality of functional modules comprises caching battery data from at least the first functional module among the plurality of functional modules and relaying the cached battery data to another functional module;
wherein the defined function is one of the following:
performing battery data communication with a plurality of battery racks when the battery data management apparatus is connected thereto;
controlling the plurality of battery;
performing a user interface operation; and
performing battery data logging of an energy storage system, when the battery data management apparatus is connected thereto;
**characterised by** controlling, by the first controller, operations of the plurality of functional modules and the first broker comprises, if a failure occurs in the first functional module among the plurality of functional modules, controlling another functional module to perform the defined first function of the functional module.

9. The operating method of claim 8, wherein the controlling, by the first controller, of the operations of the plurality of functional modules and the first broker comprises, if a failure occurs in the first functional module among the plurality of functional modules, controlling, by the first controller, another functional module to perform the defined function of the first functional module.

10. The operating method of claim 8, further comprising:
Relaying (S103), by a second broker (140), linked operations among the plurality of functional modules based on battery data from at least a second functional module among the plurality of functional modules; and
Controlling (S105), by a second controller (150), operations of the plurality of functional modules and the second broker.

11. The operating method of claim 10, wherein the relaying, by the first broker, of the linked operations among the plurality of functional modules comprises transmitting, by the first broker, the battery data cached from the first functional module among the plurality of functional modules to the second broker, and
the relaying, by the second broker, of the linked operations among the plurality of functional modules comprises transmitting, by the second broker, the battery data cached from the second functional module among the plurality of functional modules to the first broker.

12. The operating method of claim 10, wherein the controlling, by the first controller, of the operations of the plurality of functional modules and the first broker comprises, if a failure occurs in the first broker, controlling, by the first controller, at least the first functional module among the plurality of functional modules performing a battery data communication with the first broker to perform a battery data communication with the second broker, and
the controlling, by the second controller, of the operations of the plurality of functional modules and the second broker comprises, if a failure occurs in the second broker, controlling, by the second controller, at least the second functional module among the plurality of functional modules performing a battery data communication with the second broker to perform a battery data communication with the first broker.

## Patentansprüche

1. Batteriedaten-Verwaltungsvorrichtung (100), umfassend:
eine Mehrzahl funktionaler Module (110; 111, 112, 113, 114), wobei jedes aus der Mehrzahl funktionaler Module dazu eingerichtet ist, auf Grundlage eines vorfestgelegten Algorithmus eine definierte Funktion durchzuführen;
einen ersten Vermittler (120), welcher dazu eingerichtet ist, verknüpfte Vorgänge unter der Mehrzahl funktionaler Module durch ein Cachen von Batteriedaten von wenigstens einem ersten funktionalen Modul unter der Mehrzahl funktionaler Module und durch ein Weiterleiten der gecachten Batteriedaten an ein weiteres funktionales Modul weiterzuleiten; und
eine erste Steuereinheit (130), welche dazu eingerichtet ist, Vorgänge der Mehrzahl funktionaler Module und den ersten Vermittler zu steuern;
wobei die definierte Funktion jedes aus der Mehrzahl funktionaler Module eine der folgenden ist:
Durchführen einer Batteriedaten-Kommunikation mit einer Mehrzahl von Batteriegestellen, wenn die Batteriedaten-Verwaltungsvorrichtung damit verbunden ist;
Steuern der Mehrzahl von Batterien;
Durchführen eines Benutzerschnittstellenvorgangs; und
Durchführen einer Batteriedaten-Protokollierung eines Energiespeichersystems, wenn die Batteriedaten-Verwaltungsvorrichtung damit verbunden ist;
**dadurch gekennzeichnet, dass** die erste Steuereinheit ferner dazu eingerichtet ist, ein weiteres funktionales Modul zu steuern, um die definierte erste Funktion des funktionalen Moduls durchzuführen, wenn in dem ersten funktionalen Modul unter der Mehrzahl funktionaler Module ein Fehler auftritt.

2. Batteriedaten-Verwaltungsvorrichtung nach Anspruch 1, wobei die Mehrzahl funktionaler Module ferner dazu eingerichtet ist, die definierte Funktion auf Grundlage eines Steuerbefehls der ersten Steuereinheit durchzuführen.

3. Batteriedaten-Verwaltungsvorrichtung nach Anspruch 1, wobei die Mehrzahl funktionaler Module ferner dazu eingerichtet ist, die Batteriedaten durch ein Durchführen einer Batteriedaten-Kommunikation mit dem ersten Vermittler zu übertragen.

4. Batteriedaten-Verwaltungsvorrichtung nach Anspruch 1, ferner umfassend:
einen zweiten Vermittler (140), welcher dazu eingerichtet ist, verknüpfte Vorgänge unter der Mehrzahl funktionaler Module auf Grundlage von Batteriedaten von wenigstens einem zweiten funktionalen Modul unter der Mehrzahl funktionaler Module weiterzuleiten; und
eine zweite Steuereinheit (150), welche dazu eingerichtet ist, Vorgänge der Mehrzahl funktionaler Module und den zweiten Vermittler zu steuern.

5. Batteriedaten-Verwaltungsvorrichtung nach Anspruch 4, wobei der erste Vermittler und der zweite Vermittler ferner dazu eingerichtet sind, die Batteriedaten zu teilen, welche von der Mehrzahl funktionaler Module gecacht sind.

6. Batteriedaten-Verwaltungsvorrichtung nach Anspruch 5, wobei einer aus dem ersten Vermittler und dem zweiten Vermittler ferner dazu eingerichtet ist, die Batteriedaten, welche von dem ersten oder dem zweiten funktionalen Modul unter der Mehrzahl funktionaler Module gecacht sind, zu dem anderen aus dem ersten Vermittler und dem zweiten Vermittler zu übertragen.

7. Batteriedaten-Verwaltungsvorrichtung nach Anspruch 4, wobei die erste Steuereinheit oder die zweite Steuereinheit ferner dazu eingerichtet ist, wenn ein Fehler in einem aus dem ersten Vermittler und dem zweiten Vermittler auftritt, das erste oder das zweite funktionale Modul unter der Mehrzahl funktionaler Module zu steuern, welches eine Batteriedaten-Kommunikation mit dem einen aus dem ersten Vermittler und dem zweiten Vermittler durchführt, um eine Batteriedaten-Kommunikation mit dem anderen aus dem ersten Vermittler und dem zweiten Vermittler durchzuführen.

8. Betriebsverfahren einer Batteriedaten-Verwaltungsvorrichtung, wobei das Betriebsverfahren umfasst:
Durchführen (S101), durch eine Mehrzahl funktionaler Module (110; 111, 112, 113, 114), einer definierten Funktion auf Grundlage eines vorfestgelegten Algorithmus;
Weiterleiten (S102), durch einen ersten Vermittler (120), verknüpfter Vorgänge unter der Mehrzahl funktionaler Module auf Grundlage von Batteriedaten von wenigstens einem ersten funktionalen Modul unter der Mehrzahl funktionaler Module; und
Steuern (S104), durch eine erste Steuereinheit (130), von Vorgängen der Mehrzahl funktionaler Module und des ersten Vermittlers;
wobei ein Weiterleiten, durch den ersten Vermittler, verknüpfter Vorgänge unter der Mehrzahl funktionaler Module ein Cachen von Batteriedaten von wenigstens dem ersten funktionalen Modul unter der Mehrzahl funktionaler Module und ein Weiterleiten der gecachten Batteriedaten an ein weiteres funktionales Modul umfasst;
wobei die definierte Funktion eine der folgenden ist:
Durchführen einer Batteriedaten-Kommunikation mit einer Mehrzahl von Batteriegestellen, wenn die Batteriedaten-Verwaltungsvorrichtung damit verbunden ist;
Steuern der Mehrzahl von Batterien;
Durchführen eines Benutzerschnittstellenvorgangs; und
Durchführen einer Batteriedaten-Protokollierung eines Energiespeichersystems, wenn die Batteriedaten-Verwaltungsvorrichtung damit verbunden ist;
**dadurch gekennzeichnet, dass** ein Steuern, durch die erste Steuereinheit, von Vorgängen der Mehrzahl funktionaler Module und des ersten Vermittlers ein Steuern eines weiteren funktionalen Moduls umfasst, um die definierte erste Funktion des funktionalen Moduls durchzuführen, wenn in dem ersten funktionalen Modul unter der Mehrzahl funktionaler Module ein Fehler auftritt.

9. Betriebsverfahren nach Anspruch 8, wobei das Steuern, durch die erste Steuereinheit, der Vorgänge der Mehrzahl funktionaler Module und des ersten Vermittlers, wenn ein Fehler in dem ersten funktionalen Modul unter der Mehrzahl funktionaler Module auftritt, ein Steuern eines weiteren funktionalen Moduls durch die erste Steuereinheit umfasst, um die definierte Funktion des ersten funktionalen Moduls durchzuführen.

10. Betriebsverfahren nach Anspruch 8, ferner umfassend:
Weiterleiten (S103), durch einen zweiten Vermittler (140), verknüpfter Vorgänge unter der Mehrzahl funktionaler Module auf Grundlage von Batteriedaten von wenigstens einem zweiten funktionalen Modul unter der Mehrzahl funktionaler Module; und
Steuern (S105), durch eine zweite Steuereinheit (150), von Vorgängen der Mehrzahl funktionaler Module und des zweiten Vermittlers.

11. Betriebsverfahren nach Anspruch 10, wobei das Weiterleiten, durch den ersten Vermittler, der verknüpften Vorgänge unter der Mehrzahl funktionaler Module ein Übertragen, durch den ersten Vermittler, der Batteriedaten, welche von dem ersten funktionalen Modul unter der Mehrzahl funktionaler Module gecacht sind, an den zweiten Vermittler umfasst, und
das Weiterleiten, durch den zweiten Vermittler, der verknüpften Vorgänge unter der Mehrzahl funktionaler Module ein Übertragen, durch den zweiten Vermittler, der Batteriedaten, welche von dem zweiten funktionalen Modul unter der Mehrzahl funktionaler Module gecacht sind, an den ersten Vermittler umfasst.

12. Betriebsverfahren nach Anspruch 10, wobei das Steuern, durch die erste Steuereinheit, der Vorgänge der Mehrzahl funktionaler Module und des ersten Vermittlers ein Steuern, durch die erste Steuereinheit, wenigstens des ersten funktionalen Moduls unter der Mehrzahl funktionaler Module umfasst, welches eine Batteriedaten-Kommunikation mit dem ersten Vermittler durchführt, um eine Batteriedaten-Kommunikation mit dem zweiten Vermittler durchzuführen, wenn in dem ersten Vermittler ein Fehler auftritt, und
das Steuern, durch die zweite Steuereinheit, der Vorgänge der Mehrzahl funktionaler Module und des zweiten Vermittlers ein Steuern, durch die zweite Steuereinheit, wenigstens des zweiten funktionalen Moduls unter der Mehrzahl funktionaler Module umfasst, welches eine Batteriedaten-Kommunikation mit dem zweiten Vermittler durchführt, um eine Batteriedaten-Kommunikation mit dem ersten Vermittler durchzuführen, wenn in dem zweiten Vermittler ein Fehler auftritt.

## Revendications

1. Appareil de gestion de données de batterie (100) comprenant :
une pluralité de modules fonctionnels (110 ; 111, 112, 113, 114), chacun de la pluralité de modules fonctionnels étant configuré pour réaliser une fonction définie sur la base d'un algorithme préétabli ;
un premier intermédiaire (120) configuré pour relayer des opérations liées parmi la pluralité de modules fonctionnels en mettant en mémoire cache des données de batterie provenant d'au moins un premier module fonctionnel parmi la pluralité de modules fonctionnels et en relayant les données de batterie mises en mémoire cache vers un autre module fonctionnel ; et
un premier dispositif de commande (130) configuré pour commander des opérations de la pluralité de modules fonctionnels et du premier intermédiaire ;
dans lequel la fonction définie de chacun de la pluralité de modules fonctionnels est l'une des suivantes :
la réalisation d'une communication de données de batterie avec une pluralité de bâtis de batterie lorsque l'appareil de gestion de données de batterie est connecté à ceux-ci ;
la commande de la pluralité de batteries ;
la réalisation d'une opération d'interface utilisateur ; et
la réalisation d'une consignation de données de batterie d'un système de stockage d'énergie, lorsque l'appareil de gestion de données de batterie est connecté à celui-ci ;
**caractérisé en ce que** le premier dispositif de commande est en outre configuré, si une défaillance se produit dans le premier module fonctionnel parmi la pluralité de modules fonctionnels, pour commander un autre module fonctionnel pour qu'il réalise la première fonction définie du module fonctionnel.

2. Appareil de gestion de données de batterie selon la revendication 1, dans lequel la pluralité de modules fonctionnels sont en outre configurés pour réaliser la fonction définie sur la base d'une instruction de commande du premier dispositif de commande.

3. Appareil de gestion de données de batterie selon la revendication 1, dans lequel la pluralité de modules fonctionnels sont en outre configurés pour transmettre les données de batterie en réalisant une communication de données de batterie avec le premier intermédiaire.

4. Appareil de gestion de données de batterie selon la revendication 1, comprenant en outre :
un second intermédiaire (140) configuré pour relayer des opérations liées parmi la pluralité de modules fonctionnels sur la base de données de batterie provenant d'au moins un second module fonctionnel parmi la pluralité de modules fonctionnels ; et
un second dispositif de commande (150) configuré pour commander des opérations de la pluralité de modules fonctionnels et du second intermédiaire.

5. Appareil de gestion de données de batterie selon la revendication 4, dans lequel le premier intermédiaire et le second intermédiaire sont en outre configurés pour partager les données de batterie mises en mémoire cache à partir de la pluralité de modules fonctionnels.

6. Appareil de gestion de données de batterie selon la revendication 5, dans lequel l'un parmi le premier intermédiaire et le second intermédiaire est en outre configuré pour transmettre les données de batterie mises en mémoire cache depuis le premier ou le second module fonctionnel parmi la pluralité de modules fonctionnels vers l'autre parmi le premier intermédiaire et le second intermédiaire.

7. Appareil de gestion de données de batterie selon la revendication 4, dans lequel le premier dispositif de commande ou le second dispositif de commande est en outre configuré si une défaillance se produit dans l'un parmi le premier intermédiaire et le second intermédiaire, pour commander le premier ou le second module fonctionnel parmi la pluralité de modules fonctionnels réalisant une communication de données de batterie avec l'un parmi le premier intermédiaire et le second intermédiaire pour qu'il réalise une communication de données de batterie avec l'autre parmi le premier intermédiaire et le second intermédiaire.

8. Procédé de fonctionnement d'un appareil de gestion de données de batterie, le procédé de fonctionnement comprenant :
la réalisation (S101), par une pluralité de modules fonctionnels (110 ; 111, 112, 113, 114), d'une fonction définie sur la base d'un algorithme préétabli ;
le relais (S102), par un premier intermédiaire (120), d'opérations liées parmi la pluralité de modules fonctionnels sur la base de données de batterie provenant d'au moins un premier module fonctionnel parmi la pluralité de modules fonctionnels ; et
la commande (S104), par un premier dispositif de commande (130), d'opérations de la pluralité de modules fonctionnels et du premier intermédiaire ;
dans lequel le relais, par le premier intermédiaire, d'opérations liées parmi la pluralité de modules fonctionnels comprend la mise en mémoire cache de données de batterie provenant d'au moins le premier module fonctionnel parmi la pluralité de modules fonctionnels et le relais des données de batterie mises en mémoire cache vers un autre module fonctionnel ;
dans lequel la fonction définie est l'une des suivantes :
la réalisation d'une communication de données de batterie avec une pluralité de bâtis de batterie lorsque l'appareil de gestion de données de batterie est connecté à ceux-ci ;
la commande de la pluralité de batteries ;
la réalisation d'une opération d'interface utilisateur ; et
la réalisation d'une consignation de données de batterie d'un système de stockage d'énergie, lorsque l'appareil de gestion de données de batterie est connecté à celui-ci ;
**caractérisé en ce que** la commande, par le premier dispositif de commande, d'opérations de la pluralité de modules fonctionnels et du premier intermédiaire comprend, si une défaillance se produit dans le premier module fonctionnel parmi la pluralité de modules fonctionnels, la commande d'un autre module fonctionnel pour qu'il réalise la première fonction définie du module fonctionnel.

9. Procédé de fonctionnement selon la revendication 8, dans lequel la commande, par le premier dispositif de commande, des opérations de la pluralité de modules fonctionnels et du premier intermédiaire comprend, si une défaillance se produit dans le premier module fonctionnel parmi la pluralité de modules fonctionnels, la commande, par le premier dispositif de commande, d'un autre module fonctionnel pour qu'il réalise la fonction définie du premier module fonctionnel.

10. Procédé de fonctionnement selon la revendication 8, comprenant en outre :
le relais (S103), par un second intermédiaire (140), d'opérations liées parmi la pluralité de modules fonctionnels sur la base de données de batterie provenant d'au moins un second module fonctionnel parmi la pluralité de modules fonctionnels ; et
la commande (S105), par un second dispositif de commande (150), d'opérations de la pluralité de modules fonctionnels et du second intermédiaire.

11. Procédé de fonctionnement selon la revendication 10, dans lequel le relais, par le premier intermédiaire, des opérations liées parmi la pluralité de modules fonctionnels comprend la transmission, par le premier intermédiaire, des données de batterie mises en mémoire cache à partir du premier module fonctionnel parmi la pluralité de modules fonctionnels vers le second intermédiaire, et
le relais, par le second intermédiaire, des opérations liées parmi la pluralité de modules fonctionnels comprend la transmission, par le second intermédiaire, des données de batterie mises en mémoire cache à partir du second module fonctionnel parmi la pluralité de modules fonctionnels vers le premier intermédiaire.

12. Procédé de fonctionnement selon la revendication 10, dans lequel la commande, par le premier dispositif de commande, des opérations de la pluralité de modules fonctionnels et du premier intermédiaire comprend, si une défaillance se produit dans le premier intermédiaire, la commande, par le premier dispositif de commande, d'au moins le premier module fonctionnel parmi la pluralité de modules fonctionnels réalisant une communication de données de batterie avec le premier intermédiaire pour qu'il réalise une communication de données de batterie avec le second intermédiaire, et
la commande, par le second dispositif de commande, des opérations de la pluralité de modules fonctionnels et du second intermédiaire comprend, si une défaillance se produit dans le second intermédiaire, la commande, par le second dispositif de commande, d'au moins le second module fonctionnel parmi la pluralité de modules fonctionnels réalisant une communication de données de batterie avec le second intermédiaire pour qu'il réalise une communication de données de batterie avec le premier intermédiaire.
